Europäisches Patentamt

European Patent Office

Office européen des brevets

(11) Veröffentlichungsnummer: **0 671 425 A1**

(19)

(12) **EUROPÄISCHE PATENTANMELDUNG**

(21) Anmeldenummer: **95102936.2**

(22) Anmeldetag: **02.03.95**

(51) Int. Cl.⁶: **C08G 18/48**, C08G 18/50,
//(C08G18/48,101:00)

(30) Priorität: **12.03.94 DE 4408430**

(43) Veröffentlichungstag der Anmeldung:
**13.09.95 Patentblatt 95/37**

(84) Benannte Vertragsstaaten:
**AT BE DE ES FR GB IT NL PT**

(71) Anmelder: **BASF Schwarzheide GmbH
Schipkauer Strasse
D-01986 Schwarzheide (DE)**

(72) Erfinder: **Guettes, Bernd
Senftenberger Str. 22
D-03238 Sallgast (DE)**
Erfinder: **Hinz, Werner, Dr.
Hanns-Fay-Str. 1
D-67227 Frankenthal (DE)**
Erfinder: **Zschiesche, Ruth, Dr.
Steubenstr. 88
D-68199 Mannheim (DE)**
Erfinder: **Wagner, Klaus
Gerhard-Hauptmann-Str. 33
D-67258 Hessheim (DE)**
Erfinder: **Schuster, Marita
A.-Schweitzer-Str. 25
D-01968 Senftenberg (DE)**

(74) Vertreter: **Karg, Jochen et al
BASF Aktiengesellschaft,
Patentabteilung ZDX - C 6
D-67056 Ludwigshafen (DE)**

(54) **Verfahren zur Herstellung von hochelastischen Polyurethan-Weichschaumstoffen.**

(57) Gegenstand der Erfindung ist ein Verfahren zur Herstellung von hochelastischen Polyurethan-Weichschäumen durch Umsetzung von

a) organischen POlyisocyanaten und/oder modifizierten organischen Polyisocyanaten mit

b1) höhermolekularen Verbindungen mit mindestens 2 reaktiven Wasserstoffatomen, vorzugsweise Polyetherpolyolen,

b2) gegebenenfalls niedermolekularen Kettenverlängerungsmitteln,

b3) Flammschutzmitteln,

b4) Treibmitteln,

b5) Katalysatoren,

sowie gegebenenfalls

b6) Hilfsmitteln und/oder Zusatzstoffen,

dadurch gekennzeichnet, daß die Komponente b1) 1 bis 20 Gew.-%, bezogen auf das Gesamtgewicht der Komponenten b1 bis b6, eines hochmolekularen Polyetheralkohols mit aromatischen Aminen als Startsubstanz enthält.

Rank Xerox (UK) Business Services
(3.10/3.09/3.3.4)

Die Erfindung betrifft ein Verfahren zur Herstellung von hochelastischen Polyurethan-Weichschaumstoffen.

Die Herstellung von Polyurethan-Weichschaumstoffen durch Umsetzung von höhermolekularen vorzugsweise Polyester oder Polyetherpolyolen und gegebenenfalls Kettenverlängerungs- und/oder Vernetzungsmitteln mit organischen und/oder modifizierten organischen Polyisocyanaten ist bekannt und wird in zahlreichen Patent- und Literaturveröffentlichungen beschrieben.

Beispielhaft genannt sei das Kunststoffhandbuch, Band VII, Polyurethane, Carl-Hanser-Verlag, München, 1. Auflage 1966, herausgegeben von Dr. R. Vieweg und Dr. A. Höchtlen, und zweite Auflage, 1983, herausgegeben von Dr. G. Oertel. Durch geeignete Wahl der Aufbaukomponenten und ihrer Mengenverhältnisse können Polyurethan-Weichschaumstoffe mit sehr guten mechanischen Eigenschaften hergestellt werden. Probleme bereitete in jüngerer Zeit, daß aus ökologischen Gründen auf FCKW-haltige Treibmittel verzichtet werden mußte. Als Alternative wird häufig Wasser als Treibmittel eingesetzt.

Der Wassereinsatz hat Vorteile, so ist Wasser gut verfügbar und mit der Polyolkomponente gut verträglich, und auch die Verschäumung erfolgt problemlos, dem stehen allerdings auch Nachteile gegenüber.

So weisen wassergetriebene Schäume, insbesondere solche mit niedrigen Rohdichten, zumeist verschlechterte mechanische Eigenschaften auf. Insbesondere die Stauchhärte und die Rückprallelastizität sind für viele Einsatzgebiete unzureichend. Zur Behebung dieser Mängel und zur Erzielung verbesserter mechanischer Eigenschaften wurde vielfach die Polyolkomponente der Schäume optimiert.

So ist in DD-A-274 955 ein Verfahren zur Herstellung von Weichschaumpolyetheralkoholen beschrieben, die über den gesamten Verlauf der Polyetherketten Ethylenoxid-Kurzblöcke aufweisen. DD-A275 695 beschreibt ein Verfahren zur Herstellung von Weichschaumpolyetheralkoholen mit einer Propylenoxid/Ethylenoxid-Statistik mit zueinander steigenden und fallenden Alkylenoxid-Anteilen.

Derartige Polyetheralkohole bewirken zwar die Verbesserung einzelner Schaumparameter können jedoch nicht alle Nachteile wassergeschäumter Weichschaum-Polyurethane beseitigen.

Eine Möglichkeit der Verbesserung der mechanischen Eigenschaften der Schaumstoffe besteht in der Mitverwendung höherfunktioneller Polyole, bespielsweise, wie in DE-A-2 035 139 beschrieben, mit Saccharose gestarteter Polyetheralkohole in der Polyolkomponente.

Dadurch kann zwar die Härte der Schäume verbessert werden, auf Grund der starken Vernetzung werden die Schäume jedoch spröde und weisen unbefriedigende Zug- und Dehnungswerte auf.

Aufgabe der Erfindung war es, ein Verfahren zur Herstellung von hochelastischen Polyurethan-Weichschäumen mit verbesserten Elastizitätseigenschaften, insbesondere verbesserter Rückprallelastizität und verringerter Stauchhärte sowie niedrigem Raumgewicht herzustellen, die ihre vorteilhaften Eigenschaften auch bei der Verwendung von Wasser als Treibmittel behalten.

Die Aufgabe konnte überraschenderweise gelöst werden durch Verwendung von hochmolekularen Polyetherolen mit aromatischen Aminen als Startsubstanzen in einer Menge von 1 bis 20 Gew.-%, bezogen auf die Polyolkomponente des Polyurethan-Weichschaumsystems.

Gegenstand der Erfindung ist also ein Verfahren zur Herstellung von hochelastischen Polyurethan-Weichschäumen durch Umsetzung von

a) organischen Polyisocyanaten und/oder modifizierten organischen Polyisocyanaten mit

b1) höhermolekularen Verbindungen mit mindestens 2 reaktiven Wasserstoffatomen, vorzugsweise Polyetherpolyolen,

b2) gegebenenfalls niedermolekularen Kettenverlängerungsmitteln,

b3) Flammschutzmitteln,

b4) Treibmitteln,

b5) Katalysatoren,

sowie gegebenenfalls

b6) Hilfsmitteln und/oder Zusatzstoffen,

dadurch gekennzeichnet, daß die Komponente b1) 1 bis 20 Gew.-%, bezogen auf das Gesamtgewicht der Komponenten b1 bis b6, eines hochmolekularen Polyetheralkohols mit aromatischen Aminen als Startsubstanz oder einer Mischung derartiger Polyetheralkohole enthält.

Vorzugsweise wird der hochmolekulare Polyetheralkohol mit aromatischen Aminen als Startsubstanz in einer Menge von 5 bis 10 Gew.-%, bezogen auf das Gesamtgewicht der Komponenten b1 bis b6 eingesetzt. Die Herstellung dieser Polyetheralkohole erfolgt üblicherweise durch basisch katalytische Anlagerung von Alkylenoxiden an vorzugsweise mehrfunktionelle, insbesondere difunktionelle aromatische Amine.

Die erfindungsgemäß verwendeten Polyetheralkohole haben vorzugsweise Hydroxylzahlen im Bereich von 30 bis 60 mg KoH/g.

2

Als Amine werden die als Startsubstanz zur Herstellung von Polyetheralkoholen üblicherweise verwendeten aromatischen Amine eingesetzt, insbesondere Anilin, Toluylendiamin, Diphenylmethandiamin und seine höheren Homologen, insbesondere jedoch Toluylendiamin und Diphenylmethandiamin. Die Anlagerung der Alkylenoxide, vorzugsweise verwendet werden Ethylenoxid und Propylenoxid, erfolgt bei den hierfür üblichen Reaktionsbedingungen, wie Drücke von 0,1 bis 1,0 MPa und Temperaturen von 80 bis 130°C und unter Einsatz basischer Katalysatoren, insbesondere Kaliumhydroxid.

Beim Einsatz von Toluylendiamin und Diphenylmethandiamin als Startsubstanzen wird die Alkylenoxidanlagerung zumeist im Beisein von H-funktionellen, insbesondere OH-funktionellen Coinitiatoren durchgeführt.

Hierfür werden vorzugsweise 2- oder 3-funktionelle Alkohole, wie Ethylenglykol und seine höheren Homologen, Butandiol oder Glycerin eingesetzt.

In einer vorteilhaften Ausführungsform wird die Anlagerung der Alkylenoxide an eine Startsubstanz mit einem Gewichtsverhältnis von Katalysator : Koinitiatoren : aromatischen Amin von 1 : 5 : 20 begonnen und bis zu Molekulargewichten von 100 bis 500, insbesondere 200 bis 400 durchgeführt.

Zur Erreichung von Molekulargewichten ≥ 1000 wird ein Gemisch aus Katalysator und aromatischem Amin im Gewichtsverhältnis von 2:1 bis 1:2 zugesetzt und danach die Alkylenoxidanlagerung fortgesetzt.

Im Anschluß an die Alkylenoxidanlagerung wird üblicherweise eine Nachreaktionsphase zum vollständigen Alkylenoxidumsatz, die übliche Reinigung von basischem Katalysator, meist durch Säureneutralisation und anschließende Filtration sowie eine Vakuumdestillation zur Entfernung leichtflüchtiger Bestandteile durchgeführt.

Die derart hergestellten hochmolekularen Aminpolyetheralkohole stellen ein Mischpolyetheralkohol mit gleichmäßig verteilte Kettenlängen, einem geringen Gehalt an Nebenprodukten sowie einem Minimalanteil von Doppelbindungen dar und können ohne Verträglichkeitsprobleme zu üblichen Weichschaumpolyetheralkoholen zugemischt werden.

Durch die erfindungsgemäße Verwendung der hochmolekularen, mit aromatischen Aminen gestarteten Polyetheralkohole können insbesondere die mechanischen Eigenschaften wassergetriebener Polyurethan-Weichschäume deutlich verbessert werden. Es können Schäume mit einer niedrigeren Härter einer höheren Rückprallelastizität, einem verringerten Druckverformungsrest und niedrigerer Stauchhärte erhalten werden. Damit ist es gelungen, die aus der Verwendung von Wasser als Treibmittel resultierenden Nachteile bei den Elastizitätseigenschaften zu überwinden.

Zu den für das erfindungsgemäße Verfahren verwendbaren Ausgangskomponenten ist im einzelnen folgendes auszuführen:

a) Zur Herstellung von PU-Weichschaumstoffen eignen sich die bekannten organischen, z.B. aliphatischen, cycloaliphatischen, araliphatischen, cycloaliphatisch-aromatischen und vorzugsweise aromatischen Di- und/oder Polyisocyanate. Im einzelnen seien als aromatische Polyisocyanate beispielhaft genannt: Mischungen aus 4,4'- und 2,4'-Diphenylmethandiisocyanaten (MDI), Mischungen aus MDI-Isomeren und Polyphenyl-polymethylen-polyisocyanaten, sogenanntes Roh-MDI, zweckmäßigerweise mit einem Gehalt an MDI-Isomeren von mindestens 50 Gew.-%, vorzugsweise von 60 bis 90 Gew.-% und mehr, bezogen auf das Gesamtgewicht der Mischung, 2,4- und 2,6-Toluylen-diisocyanat sowie die entsprechenden handelsüblichen Isomerenmischungen, Mischungen aus 2,4- und 2,6-Toluylen-diisocyanat und MDI, vorzugsweise 4,4'- und 2,4'-MDI, und/oder Roh-MDI, beispielsweise solchen mit einem MDI-Gehalt von 30 bis 90 Gew.-%, vorzugsweise 40 bis 80 Gew.-%, bezogen auf das Gesamtgewicht des Roh-MDI's.

Geeignet sind auch sogenannte modifizierte mehrwertige Isocyanate, d.h. Produkte, die durch chemische Umsetzung organischer Di- und/oder Polyisocyanate erhalten werden. Beispielhaft genannt seien Ester-, Harnstoff-, Biuret-, Allophanat-, Isocyanurat- und vorzugsweise Carbodiimid-, Uretonimin- und/oder Urethangruppen enthaltende Di- und/oder Polyisocyanate. Im einzelnen kommen beispielsweise in Betracht: Urethangruppen enthaltende Prepolymere mit einem NCO-Gehalt von 14 bis 2,8 Gew.-%, vorzugsweise von 12 bis 3,5 Gew.-% oder Quasiprepolymere mit einem NCO-Gehalt von 35 bis 14 Gew.-%, vorzugsweise von 34 bis 22 Gew.-%, wobei mit Urethangruppen modifizierte Polyisocyanate aus Toluylen-diisocyanaten, insbesondere einem NCO-Gehalt von 34 bis 28 Gew.-% und solche aus 4,4'-MDI, 4,4'- und 2,4'-MDI-Isomerenmischungen oder RohMDI, insbesondere einen NCO-Gehalt von 28 bis 14 Gew.-%, insbesondere bevorzugt von 28 bis 22 Gew.-%, bezogen auf das Gesamtgewicht, aufweisen und hergestellt werden durch Umsetzung von Diolen, Oxalkylen-glykolen und/oder Polyoxyalkylen-glykolen mit Molekulargewichten von 62 bis 6000, vorzugsweise von 134 bis 4200 mit Toluylen-diisocyanaten, 4,4'-MDI, MDI-Isomerengemischen und/oder Roh-MDI z.B. bei Temperaturen von 20 bis 110°C, vorzugsweise von 50 bis 90°C, wobei als Oxalkylen- und Polyoxyalkylen-glykole, die einzeln oder als Gemische eingesetzt werden können, beispielhaft genannt seien: Diethylen-, Dipropylen-, Polyoxyethylen-, Polyoxypropylen- und Polyoxypropylen-polyoxyethylen-glykole, Carbodiimidgruppen und/oder Uretonimingruppen enthaltende Polyisocyanate, z.B. auf MDI-Isomeren- und/oder Toluylen-diisocyanat-Basis.

Besonders bewährt haben sich jedoch und daher vorzugsweise Anwendung finden Toluylen-diisocyanat-2,4, Toluylen-diisocyanat-2,6, Mischungen aus Toluylen-diisocyanat-2,4 und -2,6 und insbesondere Mischungen aus 4,4'- und 2,4'-MDI, Roh-MDI mit einem MDI-Gehalt von mindestens 50 Gew.-%, bezogen auf das Gesamtgewicht, Mischungen aus 4,4'- und 2,4'-MDI und 2,6-TDI-Gemischen, Mischungen aus Roh-MDI und 2,4- und 2,6-TDI-Gemischen und Urethangruppen enthaltenden Polyisocyanatmischungen mit einem NCO-Gehalt von 28 bis 14 Gew.-%, bezogen auf das Gesamtgewicht, hergestellt aus MDI und/oder Roh-MDI und Polyoxypropylen-glykolen mit einem Molekulargewicht von 134 bis 4200 oder Polyoxypropylen-polyoxyethylen-polyolen mit einem Ethylenoxidgehalt von maximal 35 Gew.-% und einem Molekulargewicht von 134 bis 4200, vorzugsweise von 1800 bis 4200.

b1) Als höhermolekulare Verbindungen mit mindestens zwei reaktiven Wasserstoffatomen (b) finden, insbesondere Polyetherpolyole, zweckmäßigerweise solche mit einer Funktionalität von durchschnittlich 2,0 bis 4,0, vorzugsweise 2,0 bis 3,0 und insbesondere 2,0 bis 2,4 und einem Molekulargewicht von durchschnittlich 2200 bis 8000, vorzugsweise 3600 bis 6500 Verwendung. Geeignet sind auch Mischungen aus Polyetherpolyolen, und Polyether-polyaminen mit einem Polyetherpolyamingehalt von maximal 35 Gew.-%, vorzugsweise 0,5 bis 12 Gew.-%, bezogen auf das Gesamtgewicht. Geeignet sind ferner Polyether-polyole mit Molekulargewichten unter 2200, beispielsweise von 250 bis 2200. Diese werden jedoch zweckmäßigerweise nur in solchen Mengen und im Gemisch mit höhermolekularen Polyether-polyolen eingesetzt, so daß Mischungen mit Molekulargewichten von durchschnittlich mindestens 2200 resultieren.

Geeignete Polyether-polyole können nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls, das 2 bis 4, vorzugsweise 2 bis 3 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2- 1,3-, 1,4- 1,5- und 1,6-Hexamethylendiamin.

Als Startermolküle kommen ferner in Betracht: Alkanolamine, Dialkanolamine und/oder Trialkanolamine, wie Ethanolamin, Diethanolamin, N-Methyl- und N-Ethyl-ethanolamin, N-Methyl- und N-Ethyl-diethanolamin und Triethanolamin und Ammoniak. Vorzugsweise verwendet werden mehrwertige, insbesondere zweiund/oder dreiwertige Alkohole und/oder Alkylenglykole, wie z.B. Ethandiol, Propandiol-1,2 und -1,3, Diethylenglykol, Dipropylenglykol, Butandiol-1,4, Hexandiol-1,6, Glycerin und Trimethylol-propan sowie Pentaerythrit.

Die Polyether-polyole, vorzugsweise Polyoxypropylen- und Polyoxypropylen-polyoxyethylen-polyole, besitzen, wie bereits dargelegt wurde, eine Funktionalität von 2 bis 4, vorzugsweise 2 bis 3,0 und insbesondere 2 bis 2,4 und Molekulargewichte von 2200 bis 8000, vorzugsweise 3600 bis 6500 und insbesondere 3900 bis 6000 und geeignete Polyoxytetramethylenglykole ein Molekulargewicht bis ungefähr 3500, vorzugsweise von 250 bis 2200. Insbesondere eingesetzt werden Polyoxypropylen-polyoxyethylen-polyole mit mehr als 50 %, vorzugsweise mehr als 70 % endständigen primären Hydroxylgruppen.

Als Polyether-polyole eignen sich ferner polymermodifizierte Polyether-polyole, vorzugsweise Pfropf-polyether-polyole. Diese können hergestellt werden durch in situ Polymerisation von olefinisch ungesättigten Monomeren oder -gemischen, wie z.B. Styrol, Acrylnitril oder vorzugsweise Styrol-Acrylnitrilmischungen, in Polyetherpolyolen, z.B. den oben beschriebenen Polyetherpolyolen, analog den Angaben der deutschen Patentschriften Nrs. 11 11 394, 12 22 669 (US 3 304 273, 3 383 351, 3 523 093), 11 52 536 (GB 1 040 452) und 11 52 537 (GB 987 618) oder durch Dispergieren von Pfropf-polymeren, die zuvor durch radikalische Polymerisation in Lösungsmittel hergestellt wurden, in Polyether-polyolen analog den Angaben der US-Patentschriften 3 391 092, 4 014 846, 4 093 573. Zur Herstellung der Pfropf-polyetherpolyole eignen sich sowohl die obengenannten gesättigten Polyetherpolyole, die gemäß US Reissue Patent Nr. 28 715 im wesentlichen frei sind von ethylenisch ungesättigten Einheiten als auch olefinisch ungesättigte Polyether-polyole wie sie z.B. in der US-Patentschrift 3 652 659 und im US Reissue Patent 29 014 beschrieben werden. Als polymermodifizierte Polyoxyalkylenpolyole eignen sich ferner tert. Aminogruppen gebunden enthaltende Polyurethan-Polyether-polyoldispersionen, wie sie beispielsweise beschrieben werden in der DE-A-32 31 497. Die polymermodifizierten Polyoxyether-polyole, die zweckmäßigerweise 2 bis 35 Gew.-%, vorzugsweise 3 bis 25 Gew.-%, bezogen auf das Gesamtgewicht, Polymerpartikel besitzen, können ebenso wie die Polyoxyalkylen-polyole einzeln oder in Form von Mischungen verwendet werden.

Bewährt haben sich beispielsweise Polyether-polyolmischungen (b1 bestehend aus
- höhermolekularen Polyether-polyolen mit einer Funktionalität von durchschnittlich 2 bis 3 und
- höhermolekularen polymermodifizierten Polyether-polyolen mit einer Funktionalität von durchschnittlich 2 bis 3, ausgewählt aus der Gruppe der tert. Aminogruppen gebunden enthaltenden Polyurethan-Polyetherpolyoldispersionen und/oder insbesondere der Pfropfpolyether-polyole. Nach einer bevorzugten Ausführungsform besteht die Polyolmischung (b1) zweckmäßigerweise aus
- mindestens 60 Gew.-%, vorzugsweise 75 bis 99,9 Gew.-%, bezogen auf das Gewicht der Mischung (b), mindestens eines Polyether-polyols mit einer durchschnittlichen Funktionalität von 2 bis 3, insbesondere 2 bis 2,4 und einem durchschnittlichen Molekulargewicht von 3600 bis 6500, insbesondere 3900 bis 6000 und
- weniger als 40 Gew.-%, vorzugsweise 25 bis 0,1 Gew.-%, bezogen auf das Gewicht der Mischung (b), mindestens eines polymermodifizierten Polyether-polyols mit einer Funktionalität von durchschnittlich 2 bis 3, insbesondere 2 bis 2,4 und einem durchschnittlichen Molekulargewicht von 3600 bis 6500, insbesondere 3900 bis 6000, ausgewählt aus der Gruppe der tert. Aminogruppen gebunden enthaltenden Polyurethan-Polyether-polyoldispersionen, vorzugsweise der Pfropfpolyether-polyole oder von Mischungen davon.

b2) Zur Herstellung der PU-Weichschaumstoffe werden zweckmäßigerweise zusätzlich Kettenverlängerungs und/oder Vernetzungsmittel mitverwendet. Als derartige Mittel kommen polyfunktionelle, insbesondere di- und trifunktionelle Verbindungen mit Molekulargewichten von 18 bis ungefähr 400, vorzugsweise von 62 bis ungefähr 300 in Betracht. Verwendet werden beispielsweise Di- und/oder Trialkanolamine, wie z.B. Diethanolamin und Triethanolamin, aliphatische Diole und/oder Triole mit 2 bis 6 Kohlenstoffatomen im Alkylenrest, wie z.B. Ethan-, 1,4-Butan-, 1,5-Pentan-, 1,6-Hexandiol, Glycerin und/oder Trimethylolpropan, Wasser und niedermolekulare Ethoxylierungs- und/oder Propoxylierungsprodukte, hergestellt aus den vorgenannten Dialkanolaminen, Trialkanolaminen, Diolen und/oder Triolen sowie aliphatischen und/oder aromatischen Diaminen wie z.B. 1,2-Ethan-, 1,4-Butan, 1,6-Hexandiamin, 2,4- und/oder 2,6-Toluylen-diamin, 4,4'-Diamino-diphenylmethan, 3,3'-di- und/oder 3,3', 5,'-tetraalkyl-substituierten 4,4'-Diamino-diphenylmethanen als Startermolekülen und Alkylenoxid oder -gemischen.

Als Kettenverlängerungsmittel (c) vorzugsweise eingesetzt werden Dialkanolamine, Diole und/oder Triole und insbesondere Ethandiol, Butandiol-1,4, Hexandiol-1,6, Diethanolamin, Trimethylolpropan und Glycerin oder Mischungen aus mindestens zwei der vorgenannten Verbindungen. Die Kettenverlängerungs- und/oder Vernetzungsmittel kommen zweckmäßigerweise in solchen Gewichtsmengen zur Anwendung, daß pro 100 Gew. -Teile der höhermolekularen Verbindungen mit mindestens zwei reaktiven Wasserstoffatomen (b) 0 bis 25 Gew.-Teile, vorzugsweise 4 bis 10 Gew.-Teile der Komponente (c) in der Reaktionsmischung vorliegen.

b3) Zur Erhöhung der Flammwidrigkeit unter gleichzeitiger Reduzierung der Rauchgasdichte im Brandfalle werden zur Herstellung der PU-Weichschaumstoffe als Flammschutzmittel beispielsweise Melamin oder Blähgraphit in wirksamen Mengen verwendet. Das Melamin und der Blähgraphit können hierzu in handelsüblicher Form eingesetzt werden.

Weiterhin kommen als Flammschutzmittel, die in Mengen von 0 bis 15 Gew.-Teilen, vorzugsweise 0,5 bis 8 Gew.-Teilen, bezogen auf 100 Gew.-Teile der höhermolekularen Verbindungen mit mindestens zwei reaktiven Wasserstoffatomen (b1) verwendet werden können, beispielsweise in Betracht: Stärke, zweckmäßigerweise ausgewählt aus der Gruppe der Mais, Reis-, Kartoffel- oder Weizenstärke oder Mischungen davon sowie gegebenenfalls chemisch modifizierte Stärkederivate, Phosphorverbindungen, wie z.B. Trikresylphosphat, Tris-(2-chlorethyl)-phosphat, Tris-(2-chlorpropyl)-phosphat, Tris-(1,3-dichlorpropyl)-phosphat, Tris-(2,3-dibrompropyl)-phosphat und Tetrakis-(2-chlorethyl)-ethylen-diphosphat und anorganische Salze, wie z.B. Antimontrioxid, Aluminiumoxidhydrat, Ammoniumsulfat, Calciumsulfat, Ammoniumphosphate und vorzugsweise modifizierte oder unmodifizierte Ammoniumpolyphosphate.

Zur Vereinfachung der Handhabung und leichteren Verarbeitbarkeit können aus den Flammschutzmitteln und höhermolekularen Verbindungen mit mindestens zwei reaktiven Wasserstoffatomen Dispersionen hergestellt werden. Derartige bevorzugt zur Anwendung kommende Melamin-Blähgraphit-Polyether-polyoldispersionen bestehen aus 5 bis 100 Gew. -Teilen, vorzugsweise 35 bis 80 Gew.-Teilen und insbesondere 45 bis 65 Gew.-Teilen Melamin, 0,1 bis 35 Gew.-Teilen, vorzugsweise 1 bis 25 Gew.-Teilen und insbesondere 6 bis 18 Gew.-Teilen Blähgraphit und 100 Gew.-Teilen mindestens eines Polyether-polyols, eines polymermodifizierten Polyether-polyols oder Mischungen davon mit einer Funktionalität von 2 bis 3 und einem Molekulargewicht von 3600 bis 6500. Vorteilhaft ist hierbei, daß den Dispersionen die Treibmittel (e), Katalysatoren (f) sowie gegebenenfalls Hilfsmittel und/oder Zusatzstoffe (g) problemlos einverleibt werden können oder die Melamin-Blähgraphit-Polyether-polyoldispersionen separat der Mischvorrichtung, vorzugsweise dem Mischkopf, zugeführt und hierbei gleichzeitig dosiert werden können.

b4) Zu Treibmitteln (e), welche zur Herstellung der PU-Weichschaumstoffe verwendet werden können, gehört vorzugsweise Wasser, das mit Isocyanatgruppen unter Bildung von Kohlendioxid als Treibgas reagiert. Die Wassermengen, die zweckmäßigerweise eingesetzt werden, betragen 0,1 bis 8 Gew.-Teile, vorzugsweise 1,0 bis 3,5 Gew.-Teile und insbesondere 2,0 bis 3,0 Gew.-Teile, bezogen auf 100 Gew.-Teile der höhermolekularen Verbindungen mit mindestens zwei reaktiven Wasserstoffatomen (b).

Im Gemisch mit Wasser können auch physikalisch wirkende Treibmittel eingesetzt werden, wobei zur Herstellung der PUR-Weichschaumstoffe vorzugsweise ausschließlich physikalisch wirkende Treibmittel Anwendung finden. Geeignet sind Flüssigkeiten, welche gegenüber den organischen, gegebenenfalls modifizierten Polyisocyanaten (a) inert sind und Siedepunkte unter 100°C, vorzugsweise unter 50°C, insbesondere zwischen -50°C und 30°C bei Atmosphärendruck aufweisen, so daß sie unter dem Einfluß der exothermen Polyadditionsreaktion verdampfen. Beispiele derartiger, vorzugsweise verwendbarer Flüssigkeiten sind Kohlenwasserstoffe, wie n- und iso-Pentan, technische Pentangemische, n- und iso-Butan und Propan, Ether, wie Furan, Dimethylether und Diethylether, Ketone, wie Aceton und Methylethylketon, Ester wie Ethylacetat und Methylformiat und vorzugsweise halogenierte Kohlenwasserstoffe, wie Methylenchlorid, Difluormethan, Trichlorfluormethan, Dichlordifluormethan, Dichlormonofluormethan, 1,1,1-Dichlorfluorethan, 1, 1, 1-Chlordifluorethan, Dichlortetrafluorethan, Tetrafluorethan, 1,1,2-Trichlor-1,2,2-trifluorethan und Heptafluorpropan, sowie Edelgase, wie z.B. Krypton. Auch Gemische dieser niedrigsiedenden Flüssigkeiten untereinander und/oder mit anderen substituierten oder unsubstituierten Kohlenwasserstoffen können verwendet werden.

Die erforderliche Menge an physikalisch wirkenden Treibmitteln kann in Abhängigkeit von der gewünschten Schaumstoffdichte auf einfache Weise ermittelt werden und beträgt 0 bis ungefähr 30 Gew. -Teile, vorzugsweise 0 bis 20 Gew.-Teile pro 100 Gew.-Teile der höhermolekularen Verbindungen (b), wobei sich ihr Anteil bei der Mitverwendung von Wasser anteilmäßig verringert.

b5) Zur Beschleunigung der Umsetzung zwischen den höhermolekularen Verbindungen mit mindestens zwei reaktiven Wasserstoffatomen, hydroxylgruppenhaltigen Kettenverlängerungs- oder Vernetzungsmitteln und Wasser als Treibmittel und den organischen Polyisocyanaten und/oder modifizierten Polyisocyanaten werden der Reaktionsmischung übliche Polyurethankatalysatoren einverleibt. Zweckmäßigerweise verwendet werden basische Polyurethankatalysatoren, beispielsweise tertiäre Amine, wie Dimethylbenzylamin, Dicyclohexylmethylamin, Dimethylcyclohexylamin, N,N,'N'-Tetramethyldiamino-diethylether, Bis-(dimethylaminopropyl)-harnstoff, N-Methyl- bzw. N-Ethylmorpholin, Dimethylpiperazin, N-Dimethylaminoethylpiperidin, 1,2-Dimethylimidazol, 1-Azabicyclo-(2,2,0)-octan, Dimethylaminoethanol, 2-(N,N-Dimethyl-laminoethoxy)ethanol, N,N',N''-Tris-(dialkylaminoalkyl)-hexahydrotriazin, z.B. N,N',N''-Tris-(dimethylaminopropyl)-s-hexahydrotriazin, Di-(4-dimethylaminocyclohexyl)-methan und insbesondere Triethylendiamin. Geeignet sind jedoch auch Metallsalze, wie Eisen(II)-chlorid, Zinkchlorid, Bleioctoat und vorzugsweise Zinnsalze, wie Zinndioctoat, Zinndiethylhexoat und Dibutylzinndilaurat sowie insbesondere Mischungen aus tertiären Aminen und organischen Zinnsalzen. Bewährt hat sich insbesondere eine Katalysatorkombination, die als wesentliche Komponenten enthält: Triethylendiamin, Bis-(dimethylaminoethyl)ether, 2-(Dimethylaminoethoxy)ethanol, Dibutylzinndilaurat und vorzugsweise in folgenden Gewichtsmengenverhältnissen vorliegen: 0,2 bis 1,5 zu 0,1 bis 0,2 zu 0,1 bis 0,25 zu 0,1 bis 0,3 zu 0,05 bis 0,15.

Eingesetzt werden zweckmäßigerweise 0,1 bis 10 Gew.-%, vorzugsweise 0,3 bis 3 Gew.-% Katalysator auf Basis tert. Amine und/oder 0,01 bis 0,5 Gew.-%, vorzugsweise 0,03 bis 0,25 Gew.-%, Metallsalze oder 0,1 bis 5 Gew.-%, vorzugsweise 0,3 bis 3,5 Gew.-% der vorgenannten Katalysatorkombination, bezogen auf das Gewicht der höhermolekularen Verbindungen.

g) Der Reaktionsmischung können gegebenenfalls auch noch Hilfsmittel und/oder Zusatzstoffe einverleibt werden. Genannt seien beispielsweise oberflächenaktive Stoffe, Stabilisatoren, Hydrolyseschutzmittel, Porenregler, fungistatisch und bakteriostatisch wirkende Substanzen, Farbstoffe, Pigmente und Füllstoffe. In Betracht kommen beispielsweise oberflächenaktive Substanzen, welche zur Unterstützung der Homogenisierung der Ausgangsstoffe dienen und gegebenenfalls auch geeignet sind, die Zellstruktur der Schaumstoffe zu regulieren. Genannt seien beispielhaft Siloxan-Oxyalkylen-Mischpolymerisate und andere Organopolysiloxane, oxethylierte Alkylphenole, oxethylierte Fettalkohole, Paraffinöle, Rizinusöl- bzw. Rizinolsäureester und Türkischrotöl, die in Mengen von 0,05 bis 8, vorzugsweise 0,4 bis 5 Gew.-Teilen pro 100 Gew.-Teilen der höhermolekularen Verbindungen angewandt werden.

Nähere Angaben über die oben genannten anderen üblichen Hilfs- und Zusatzstoffe sind der Fachliteratur, beispielsweise der Monographie von J.H. Saunders und K.C. Frisch "High Polymers", Band XVI, Polyurethanes, Teil 1 und 2, Verlag Interscience Publishers, 1962 bzw. 1964 oder dem Kunststoff-Handbuch, Polyurethane, Band VII, Hanser-Verlag, München, Wien, 1. und 2. Auflage, 1966 und 1983 zu entnehmen.

Zur Herstellung der PU-Weichschaumstoffe werden die organischen, gegebenenfalls modifizierten Polyisocyanate, die höhermolekularen Verbindungen mit mindestens zwei reaktiven Wasserstoffatomen und gegebenenfalls die Kettenverlängerungs- und/oder Vernetzungsmittel in Gegenwart von Flammschutzmitteln, Treibmitteln, Katalysatoren und gegebenenfalls Hilfsmitteln und/oder Zusatzstoffen bei Temperaturen von 0 bis 100°C, vorzugsweise 15 bis 80°C in solchen Mengenverhältnissen zur Reaktion gebracht, daß pro NCO-Gruppe 0,5 bis 2, vorzugsweise 0,8 bis 1,3 und insbesondere ungefähr ein reaktive(s) Wasserstoffatom(e) gebunden an die Ausgangskomponenten (b1) und (b2) vorliegen und, sofern Wasser als Treibmittel eingesetzt wird, das Molverhältnis von Äquivalente Wasser zu Äquivalente NCO-Gruppe 0,5 bis 5:1, vorzugsweise 0,7 bis 0,95:1 und insbesondere 0,75 bis 0,85:1 beträgt.

Die PU-Weichschaumstoffe werden zweckmäßigerweise nach dem one shot-Verfahren durch Vermischen von zwei Komponenten A und B hergestellt, wobei die Ausgangskomponenten b1 bis b5 und gegebenenfalls b6 zu der sogenannten A-Komponente vereinigt und als B-Komponente die Ausgangskomponente (a), gegebenenfalls im Gemisch mit b3, b6 und inerten, physikalisch wirkenden Treibmitteln verwendet werden. Somit müssen die A- und B-Komponente vor Herstellung der PU-Weichschaumstoffe nur noch intensiv gemischt werden. Die Reaktionsmischungen können in offenen oder geschlossenen Formwerkzeugen sowie zu Blockschaumstoff verschäumt werden.

Die nach dem erfindungsgemäßen Verfahren hergestellten PU-Weichschaumstoffe besitzen Dichten von 30 bis 150 g/Liter, vorzugsweise von 40 bis 100 g/Liter. Sie weisen ein gutes mechanisches Eigenschaftsniveau auf. Die Formschaumstoffe finden vorzugsweise Verwendung als Polsterelemente, z.B. als Sitzpolster, Armlehnen, Kopfstützen, Sonnenblenden und Sicherheitsabdeckungen in Fahrzeugkabinen, vorzugsweise Kraftfahrzeugen und Flugzeugen.

Die Erfindung soll an nachstehenden Beispielen näher erläutert werden.

Die in den Beispielen genannten Teile beziehen sich auf das Gewicht.

Beispiel 1

In einen 2 l Versuchsautoklaven wurden nacheinander 60 g Glycerin, 15 g Toluendiamin und 3 g festes Kaliumhydroxid eingefüllt, mit $N_2$ gespült und auf 110°C erwärmt. Nach Erreichen der Temperatur wurden nacheinander 950 g Propylenoxid eindosiert und durch intensives Vermischen zur Umsetzung gebracht. Nach einer kurzen Nachreaktionsphase wurde das Vorpolymer ausgefüllt und 150 g dieses Vorpolymerisates zu einem weiteren Syntheseschritt wieder in den Reaktor eingefüllt, mit Stickstoff gespült und auf 115°C erwärmt. Dazu wurden 3 g festes Kaliumhydroxid und 6 g Toluendiamin eingebracht und anschließend nacheinander 880 g Propylenoxid eindosiert und zur Umsetzung gebracht. Nach einer kurzen Nachreaktion wurde nichtumgesetztes Propylenoxid mit Stickstoff ausgeblasen und danach bei 115°C abschließend noch 180 g Ethylenoxid eindosiert und zur Umsetzung gebracht. Nach einer dreißig-minütigen Nachreaktion bei 115°C und der üblichen Reinigung des Rohpolyethers vom Katalysator durch Säureneutralisation, Vakuumdestillation und Filtration entstand ein Polyetheralkohol mit folgenden Kennzahlen:

| | |
|---|---|
| Hydroxylzahl | = 48 mg KOH/g (DIN 53240) |
| Wasser-Gehalt | = 0,08 Gew.-% (DIN 51770) |
| Säurezahl | = 0,1 mg KOH/g (DIN 53402) |
| pH-Wert | = 8,5 (gelöst in Methanol/Wasser, Gewichtsverhältnis 10:1) |
| Jodzahl | = 0,6 g$J_2$/100 g (DIN 6162) |

Beispiel 2

In einen 2-l-Versuchsautoklaven wurden nacheinander 60 g Diphenylmethandiamin (MDA), 15 g Glycerin und 3 g festes Kaliumhydroxid eingefüllt, mit Stickstoff gespült und auf 110°C erwärmt. Nach Erreichen der Temperatur wurden nacheinander 1000 g Propylenoxid eindosiert und zur Umsetzung gebracht. Nach einer Nachreaktion wurde der Ansatz abgekühlt und ausgefüllt. 100 g dieses Vorpolymerisates wurden wieder eingefüllt, es wurde mit Stickstoff gespült und auf 115°C erwärmt. Dazu werden 4 g festes Kaliumhydroxid und 4 g MDA eingebracht und anschließend werden nacheinander ein Gemisch aus 800 g Propylenoxid und 150 g Ethylenoxid eindosiert und zur Umsetzung gebracht. Nach einer Nachreaktion und der üblichen Reinigung wie in Beispiel 1 beschrieben entstand ein Polyetheralkohol mit folgenden Kennwerten:

| | |
|---|---|
| Hydroxylzahl | = 43 mg KOH/g |
| Wasser-Gehalt | = 0,07 Gew.-% |
| Säurezahl | = 0,1 mg KOH/g |
| pH-Wert | = 8,8 |
| Jodzahl | = 0,7 g $J_2$/100 g |

Beispiel 3

130 g des Vorpolymerisats gemäß Beispiel 1 wurden in einen Reaktor gemäß Beispiel 1 eingefüllt, mit Stickstoff gespült und danach auf 115°C erwärmt. Bei dieser Temperatur wurden 3 g festes Kaliumhydroxid und 3 g Toluylendiamin in den Reaktor gegeben und nach gründlicher Homogenisierung nacheinander 900 g Propylenoxid und 200 g Ethylenoxid eindosiert und zur Umsetzung gebracht.

Nach einer Nachreaktion und der Reinigung des Polyetheralkohols wie in Beispiel 1 beschrieben entstand ein Polyetheralkohol mit folgenden Kennzahlen.

| | |
|---|---|
| Hydroxylzahl | = 38 mg KOH/g |
| Wasser-Gehalt | = 0,08 Gew.-% |
| Säurezahl | = 0,08 mg KOH/g |
| pH-Wert | = 8,3 |
| Jodzahl | = 0,7 g $J_2$/100 g |

Beispiel 4 - Herstellung des Polyurethan-Weichschaums

a) Isocyanatkomponente:
Prepolymer mit einem NCO-Gehalt von 31 Gew. -%, bestehend aus 42 Gew.-Teilen Toluylendiisocyanat 80/20, 40 Gew.-Teilen RohMDI und 18 Gew. -Teilen eines difunktionellen Polyetheralkohols aus Monoethylenglykol und Ethylenoxid mit einer Hydroxylzahl von 180 mg KOH/g.
b) Polyolkomponente:
Mischung, bestehend aus
b1) 87,70 Gew.-Teilen eines mit Glycerin gestarteten Polyoxypropylen(86,5 Gew.-%)polyoxiethylen-(13,5 Gew.-%)polyols mit einem Molekulargewicht von 5000, wobei das Ethylenoxid als Endblock eingebaut war
b2) 5,00 Gew.-Teile Polyetheralkohol gemäß Beispiel 3
b3) 2,50 Gew.-Teile eines difunktionellen Polyetheralkohols aus Monoethylenglykol und Ethylenoxid/Propylenoxid im Gewichtsverhältnis 3:1 mit einer Hydroxylzahl von 30 mg KOH/g
b4) 0,50 Gew.-Teile eines Siliconstabilisators (Tegostab® B4113 der Firma Goldschmidt)
b5) 0,90 Gew.-Teile Katalysator (Dabco® 33LV der Firma Air Products)
b6) 0,20 Gew.-Teile Dimethylcyclohexylamin
b7) 3,30 Gew.-Teile Wasser.
55 Gew.-Teile der Komponente a und 100 Gew.-Teile der Komponente b wurden bei 23°C 10 Sekunden intensiv gemischt. 700 g der erhaltenen Reaktionsmischung wurden in ein auf 30°C temperiertes metallisches Formwerkzeug mit den inneren Abmessungen 40 x 40 x 10 cm eingefüllt, das Formwerkzeug geschlossen und die Reaktionsmischung aufschäumen gelassen.

Der gebildete Polyurethan-Formkörper wurde nach 8 Minuten entformt.

Die gemessenen mechanischen Eigenschaften sind in Tabelle 1 zusammengefaßt.

Beispiel 5 (Vergleich)

Es wurde verfahren wie in Beispiel 4, jedoch wurden 92,70 Gew.-Teile b1 verwendet und auf b2 verzichtet. Die gemessenen mechanischen Eigenschaften sind in Tabelle 1 zusammengefaßt.

Tabelle 1

| Beispiel | Dichte nach DIN 53420 [g/l] | Druckverformungsrest DIN 53572 [%] | Bruchdehnung DIN 53571 [%] | Rückprallelastizität DIN [%] | Stauchhärte DIN 53577 [Kpa] |
|---|---|---|---|---|---|
| 4 | 50 | 3,5 | 135 | 69 | 5,1 |
| 5 | 50 | 7,1 | 95 | 59 | 8,6 |

**Patentansprüche**

1. Verfahren zur Herstellung von hochelastischen Polyurethan-Weichschäumen durch Umsetzung von
   a) organischen Polyisocyanaten und/oder modifizierten organischen Polyisocyanaten mit

b1) höhermolekularen Verbindungen mit mindestens 2 reaktiven Wasserstoffatomen, vorzugsweise Polyetherpolyolen,

b2) gegebenenfalls niedermolekularen Kettenverlängerungsmitteln,

b3) Flammschutzmitteln,

b4) Treibmitteln,

b5) Katalysatoren, sowie gegebenenfalls

b6) Hilfsmitteln und/oder Zusatzstoffen,

dadurch gekennzeichnet, daß die Komponente b1) 1 bis 20 Gew.-%, bezogen auf das Gesamtgewicht der Komponenten b1 bis b6, eines hochmolekularen Polyetheralkohols mit aromatischen Aminen als Startsubstanz enthält.

2. Verfahren nach Anspruch 1, dadurch gekennzeichnet, daß die Komponente b1 5 bis 10 Gew.-%, bezogen auf das Gesamtgewicht der Komponente b1) bis b6) eines hochmolekularen Polyetheralkohols mit aromatischen Aminen als Startsubstanz enthält.

3. Verfahren nach Anspruch 1, dadurch gekennzeichnet, daß der hochmolekulare Polyetheralkohol mit aromatischen Aminen als Startsubstanz ein Molekulargewicht von ≧ 1000 aufweist.

4. Verfahren nach Anspruch 1, dadurch gekennzeichnet, daß der hochmolekulare Polyetheralkohol mit aromatischen Aminen als Startsubstanz Hydroxylzahlen von 30 mg KOH/g bis 70 mg KOH/g aufweist.

5. Verfahren nach Anspruch 1, dadurch gekennzeichnet, daß die aromatischen Amine difunktionell sind.

6. Verfahren nach Anspruch 5, dadurch gekennzeichnet, daß als difunktionelles aromatisches Amin Toluylendiamin eingesetzt wird.

7. Verfahren nach Anspruch 5, dadurch gekennzeichnet, daß als aromatisches Amin Diphenylurethandiamin eingesetzt wird.

8. Verfahren nach Anspruch 5, dadurch gekennzeichnet, daß das aromatische Amin zusammen mit H-funktionelle Co-Initiatoren eingesetzt wird.

9. Verfahren nach Anspruch 8, dadurch gekennzeichnet, daß das aromatische Amin zusammen mit OH-funktionellen Co-Initiatoren eingesetzt wird.

10. Verfahren nach Anspruch 8, dadurch gekennzeichnet, daß das aromatische Amin gemeinsam mit NH- und/oder $NH_2$-funktionellen Co-Initiatoren eingesetzt wird.

Europäisches
Patentamt

**EUROPÄISCHER RECHERCHENBERICHT**

Nummer der Anmeldung

EP 95 10 2936

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | US-A-4 569 952 (RADOVICH DAVID A  ET AL)<br>* Ansprüche 1-4 *<br>* Spalte 2, Zeile 10 - Zeile 23 *<br>* Spalte 7, Zeile 22 - Zeile 44 *<br>* Spalte 8, Zeile 11 - Zeile 21 *<br>--- | 1,2,5-10 | C08G18/48<br>C08G18/50<br>//(C08G18/48,<br>101:00) |
| X | GB-A-1 398 185 (ICI LTD)<br>* Ansprüche 1,5-9 *<br>* Seite 2, Zeile 1 - Zeile 119 *<br>* Beispiel 1 *<br>--- | 1,2,5,6 | |
| X | FR-A-1 480 022 (OLIN MATHIESON)<br>* Seite 4, linke Spalte, Absatz 5 - rechte Spalte, Absatz 4 *<br>* Seite 5, linke Spalte, Absatz 2 *<br>* Seite 5, rechte Spalte, Absatz 1 *<br>--- | 1 | |
| X | GB-A-2 084 595 (TEXACO DEVELOPMENT CORP)<br>* Ansprüche 1,4-6 *<br>* Seite 2, Zeile 1 - Zeile 35 *<br>--- | 1 | |
| A | US-A-4 243 759 (HAAS JAMES L)<br>* Ansprüche 1,2 *<br>* Spalte 8, Zeile 31 - Zeile 53 *<br>--- | 1 | **RECHERCHIERTE SACHGEBIETE (Int.Cl.6)**<br><br>C08G |
| A | EP-A-0 116 758 (TEXACO DEVELOPMENT CORP)<br>* Ansprüche 1-8 *<br>----- | 1 | |

Der vorliegende Recherchenbericht wurde für alle Patentansprüche erstellt

| Recherchenort | Abschlußdatum der Recherche | Prüfer |
|---|---|---|
| DEN HAAG | 13.Juni 1995 | Van Puymbroeck, M |